# EUROPEAN PATENT APPLICATION

(11) **EP 4 826 123 A1**
(43) Date of publication of application: **21.10.2026**
(21) Application number: 24903101.4
(22) Date of filing: 30.12.2024
(51) Int. Cl.: C23C 22/07, C23C 22/74, C09D 7/61, C09D 1/00

(54) **INSULATION COATING COMPOSITION FOR ELECTRICAL STEEL SHEET, ELECTRICAL STEEL SHEET, AND MANUFACTURING METHOD THEREFOR**

(30) Priority: 15.12.2023 KR 20230183917
(71) Applicant: POSCO Co., Ltd, Gyeongsangbuk-do 37859 (KR)
(72) Inventor: KIM, Hyunjong, Pohang-si, Gyeongsangbuk-do 37859 (KR)
(74) Representative: Meissner Bolte Partnerschaft mbB
(86) International application number: PCT/IB2024/063276
(87) International publication number: WO 2025/126169

(57) **Abstract**

An insulation coating composition for an electrical steel sheet according to an embodiment of the present invention comprises 100 parts by weight of a metal phosphate, 33 to 110 parts by weight of nano silica having a particle diameter of 1 to 50 nm, 45 to 325 parts by weight of micro silica having a particle diameter of 0.5 to 50 µm, 28 to 215 parts by weight of a nitrate, 10 to 100 parts by weight of a boron compound, and 8 to 110 parts by weight of a chromium compound.

## Description

### [Technical Field]

An embodiment of the present invention relates to an insulation coating composition for an electrical steel sheet, an electrical steel sheet, and a method for manufacturing the same. Specifically, the present invention relates to an insulation coating composition for an electrical steel sheet, an electrical steel sheet, and a method for manufacturing the same, in which components of the insulation coating composition are appropriately combined so that a coating does not separate even in a high-temperature and high-humidity environment and an excellent tension-providing effect is exhibited.

### [Background Art]

An electrical steel sheet is a product used as a material for transformers, motors, and electrical equipment. Unlike general carbon steel, which emphasizes workability such as mechanical properties, an electrical steel sheet is a functional product that emphasizes electrical properties. Required electrical properties include low core loss and high magnetic flux density, magnetic permeability, and space factor.

Electrical steel sheets are further classified into grain-oriented electrical steel sheets and non-oriented electrical steel sheets. A grain-oriented electrical steel sheet is an electrical steel sheet having excellent magnetic properties in the rolling direction by forming a Goss texture ({110}<001> texture) throughout the entire steel sheet using an abnormal grain growth phenomenon called secondary recrystallization. A non-oriented electrical steel sheet is an electrical steel sheet having uniform magnetic properties in all directions on the rolled sheet.

Meanwhile, the formation of an insulation coating is a process corresponding to a finishing manufacturing process of a product. In addition to electrical properties that typically suppress the occurrence of eddy currents, it requires continuous punching workability that suppresses wear of a die when stacking a plurality of sheets to form an iron core after punching into a predetermined shape, and sticking resistance and surface adhesion to prevent the iron core steel sheets from sticking to each other after a stress relief annealing (SRA) process for recovering magnetic properties by removing processing stress of the steel sheets. In addition to these basic characteristics, excellent coating workability of the coating solution and solution stability that may be used for a long time after mixing are also required. Coating solutions used for this purpose include a chromate coating based on chromic acid and a phosphate coating based on phosphate.

Such coatings exhibit excellent corrosion resistance. However, they exhibit poor weather resistance and possess the disadvantage of being tacky. When the weather resistance is poor and the coating is tacky, a problem occurs in which the films adhere to each other during uncoiling of a wound coil. Additionally, mottled patterns may occur on the surface due to various defects in the steel sheet.

### [Disclosure]

### [Technical Problem]

In an embodiment of the present invention, an insulation coating composition for an electrical steel sheet, an electrical steel sheet, and a method for manufacturing the same are provided. Specifically, by appropriately combining components of the insulation coating composition, it is intended to provide an insulation coating composition for an electrical steel sheet, an electrical steel sheet, and a method for manufacturing the same, in which a coating does not peel off even in a high temperature and high humidity environment and which has an excellent tension providing effect.

### [Technical Solution]

An insulation coating composition for an electrical steel sheet according to an embodiment of the present invention comprises 100 parts by weight of a metal phosphate, 33 to 110 parts by weight of nano silica having a particle diameter of 1 to 50 nm, 45 to 325 parts by weight of micro silica having a particle diameter of 0.5 to 50 µm, 28 to 215 parts by weight of a nitrate, 10 to 100 parts by weight of a boron compound, and 8 to 110 parts by weight of a chromium compound.

The metal phosphate may comprise at least one of Mg, Ca, Ba, Sr, Zn, and Al.

The nitrate may include at least one of aluminum nitrate (Al(NO₃)₃), cobalt nitrate (Co(NO₃)₂), calcium nitrate (Ca(NO₃)₂), strontium nitrate (Sr(NO₃)₂), zinc nitrate (Zn(NO₃)₂), manganese nitrate (Mn(NO₃)₂), magnesium nitrate (Mg(NO₃)₂), and silver nitrate (AgNO₃).

The nitrate may include at least two of aluminum nitrate (Al(NO₃)₃), cobalt nitrate (Co(NO₃)₂), calcium nitrate (Ca(NO₃)₂), strontium nitrate (Sr(NO₃)₂), zinc nitrate (Zn(NO₃)₂), manganese nitrate (Mn(NO₃)₂), magnesium nitrate (Mg(NO₃)₂), and silver nitrate (AgNO₃).

The boron compound may comprise at least one of borax and boronic acid.

The chromium compound may include at least one of chromic acid, chromate, and dichromate.

The nano silica and the micro silica may each have a pH of 8 to 12.

The silica may have a pH of 8 to 12.

An electrical steel sheet according to an embodiment of the present invention includes an electrical steel sheet substrate and an insulation coating located on a surface of the electrical steel sheet substrate, and the insulation coating comprises 100 parts by weight of a metal phosphate, 33 to 110 parts by weight of a nano silica having a particle diameter of 1 to 50 nm, 45 to 325 parts by weight of a micro silica having a particle diameter of 0.5 to 50 µm, 28 to 215 parts by weight of a nitrate, 10 to 100 parts by weight of a boron compound, and 8 to 110 parts by weight of a chromium compound.

A method for manufacturing an electrical steel sheet according to an embodiment of the present invention comprises the steps of: preparing an electrical steel sheet substrate; applying an insulation coating composition to a surface of the electrical steel sheet substrate; and heat treating the electrical steel sheet substrate, wherein the insulation coating composition comprises 100 parts by weight of a metal phosphate, 33 to 110 parts by weight of a nano silica having a particle diameter of 1 to 50 nm, 45 to 325 parts by weight of a micro silica having a particle diameter of 0.5 to 50 µm, 28 to 215 parts by weight of a nitrate, 10 to 100 parts by weight of a boron compound, and 8 to 110 parts by weight of a chromium compound.

The heat treating step may be performed at a temperature of 700 to 1000°C for 10 seconds to 300 seconds.

### [Advantageous Effects]

According to an embodiment of the present invention, the material exhibits excellent durability in a high temperature and high humidity environment, possesses extreme corrosion resistance, and shows excellent heat resistance at high processing temperatures such as those for stress relief annealing (SRA).

According to an embodiment of the present invention, the present invention provides an excellent tension-providing effect.

### [Brief Description of the Drawings]

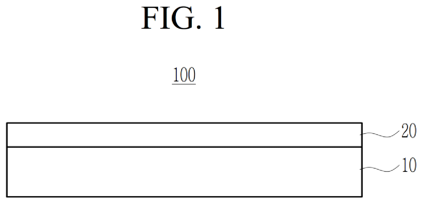

Fig. 1 is a schematic view of a cross section of an electrical steel sheet according to an embodiment of the present invention.

### [Mode for Invention]

Terms such as first, second, and third are used to describe various parts, components, regions, layers and/or sections, but are not limited thereto. These terms are used only to distinguish one part, component, region, layer or section from another part, component, region, layer or section. Accordingly, a first part, component, region, layer or section described below may be referred to as a second part, component, region, layer or section without departing from the scope of the present invention.

The terminology used herein is for the purpose of describing particular embodiments only and is not intended to limit the present invention. As used herein, the singular forms are intended to include the plural forms as well, unless the context clearly indicates otherwise. The term "comprising" as used in the specification specifies the presence of specific features, regions, integers, steps, operations, elements and/or components, and does not exclude the presence or addition of other features, regions, integers, steps, operations, elements and/or components.

When any part is referred to as being "above" or "on" another part, it may be directly on or above the other part, or another part may be present therebetween. In contrast, when any part is referred to as being "directly above" another part, there is no other part interposed therebetween.

Unless otherwise defined, all terms including technical and scientific terms used herein have the same meaning as commonly understood by a person skilled in the art to which the present invention pertains. Terms defined in commonly used dictionaries are further interpreted as having meanings consistent with the relevant technical literature and the present disclosure, and are not interpreted in an ideal or overly formal sense unless defined.

Hereinafter, embodiments of the present invention will be described in detail with reference to the accompanying drawings so that a person skilled in the art to which the present invention pertains may easily implement the same. However, the present invention may be implemented in many different forms and is not limited to the embodiments described herein.

An insulation coating composition for an electrical steel sheet according to an embodiment of the present invention comprises 100 parts by weight of a metal phosphate, 33 to 110 parts by weight of nano silica having a particle diameter of 1 to 50 nm, 45 to 325 parts by weight of micro silica having a particle diameter of 0.5 to 50 µm, 28 to 215 parts by weight of a nitrate, 10 to 100 parts by weight of a boron compound, and 8 to 110 parts by weight of a chromium compound.

Hereinafter, each component will be described in detail. In one embodiment of the present invention, 'parts by weight' refers to a relative weight ratio based on 100 parts by weight of the metal phosphate, and is based on the solid content of each component. The term 'solid content' refers to the weight when each component is dried in a state without volatiles such as a solvent. Specifically, assuming a heat treatment process during the formation of an insulation coating, it refers to the weight remaining after the heat treatment.

A metal phosphate serves as a binder in an insulation coating composition. If the metal phosphate is not included in an appropriate amount, the adhesion of the insulation coating may be deteriorated, or sufficient tension may not be obtained. The metal phosphate may be manufactured by a process of adding a metal oxide to pure phosphoric acid (H₃PO₄) and reacting them. In order to improve the adhesion of the metal phosphate, a condensation reaction between the metal phosphate and boric acid may be induced by further adding boric acid during the reaction process and maintaining it for 3 hours or more, and it may also be possible to use this condensation product instead of the metal phosphate. In one embodiment of the present invention, the term 'metal phosphate' may include not only the metal phosphate itself but also a condensation reaction product of the metal phosphate and boric acid. The manufactured metal phosphate is strongly acidic.

The metal phosphate may be added to the composition using a solution having a solid content of 50 to 70 wt%. In this case, if the solid content in the solution is too low, free phosphoric acid in the metal phosphate increases, which may result in surface moisture absorption after the preparation of the metal phosphate, and if the solid content is too high, a poor reaction and precipitation may occur due to an excess of the solid content relative to pure phosphoric acid.

The metal phosphate and metal oxide may include various metals without limitation. Specifically, the metals of the metal phosphate and the metal oxide may include one or more of Mg, Ca, Ba, Sr, Zn, and Al. More specifically, the metal phosphate may include one or more selected from the group consisting of monobasic magnesium phosphate (Mg(H₂PO₄)₂) and monobasic aluminum phosphate (Al(H₂PO₄)₃). More specifically, the metal phosphate may include monobasic magnesium phosphate (Mg(H₂PO₄)₂) and monobasic aluminum phosphate (Al(H₂PO₄)₃). In this case, the metal phosphate may include, based on solid content, 10 to 90 parts by weight of monobasic aluminum phosphate and 10 to 90 parts by weight of monobasic magnesium phosphate with respect to 100 parts by weight of the total amount. If the content of the monobasic aluminum phosphate is too low, the effect of improving tension by the addition of the monobasic aluminum phosphate may be insufficient. When the monobasic aluminum phosphate is added in an excessive amount, Al components may increase crystallization of silica and cause cracks in the insulation coating. Specifically, the metal phosphate may include, based on solid content, 20 to 80 parts by weight of monobasic aluminum phosphate and 20 to 80 parts by weight of monobasic magnesium phosphate with respect to 100 parts by weight of the total amount, and more specifically, may include 30 to 70 parts by weight of monobasic aluminum phosphate and 30 to 70 parts by weight of monobasic magnesium phosphate.

An insulation coating composition for an electrical steel sheet according to an embodiment of the present invention comprises 33 to 110 parts by weight of nano silica having a particle diameter of 1 to 50 nm.

Nano silica is a component necessary for providing tension to a steel sheet to reduce core loss. If the content of nano silica is too low, it is difficult to sufficiently obtain a tension providing effect on the steel sheet. If the content of nano silica is too high, problems may occur in terms of stickiness or solution stability. More specifically, 35 to 100 parts by weight of the nano silica may be included with respect to 100 parts by weight of metal phosphate.

Nano silica may include basic and acidic types, and more specifically, it may include basic types. When basic nano silica is included, it is advantageous in terms of the stability of the insulation coating composition, and the storage stability of the solution may be improved. The basic nano silica may have a pH of 8 to 12. The pH of nano silica may be measured in a sol form.

In an embodiment of the present invention, micro silica is further included in addition to nano silica, and nano silica and micro silica may be classified by particle diameter. Nano silica refers to silica included in a particle diameter range of 1 to 50 nm. In an embodiment of the present invention, the particle diameter may be measured with a particle diameter analyzer, Zeta Potential. More specifically, nano silica refers to silica included in a particle diameter range of 3 to 30 nm.

The nano silica may have an average particle diameter in the range of 5 to 20 nm. If the average particle diameter of the silica is too small, the condensation reaction rate is high, leading to an agglomeration phenomenon and potentially causing color deviation defects on the surface. If the average particle diameter is too large, the surface area per unit mass is small, which slows the condensation reaction rate and may cause defects. More specifically, the silica may have an average particle diameter in the range of 10 to 15 nm. In an embodiment of the present invention, the average particle diameter is an arithmetic mean.

An insulation coating composition for an electrical steel sheet according to an embodiment of the present invention comprises 45 to 325 parts by weight of micro silica having a particle diameter of 0.5 to 50 µm.

Micro silica, together with nano silica, is a component necessary to reduce core loss by providing tension to a steel sheet. When nano silica or micro silica is included alone, the tension providing effect of an insulation coating may decrease. If the content of micro silica is too low, it may be difficult to sufficiently obtain a tension providing effect on the steel sheet. If the content of micro silica is too high, problems may occur in terms of stickiness or solution stability. More specifically, micro silica may be included in an amount of 50 to 300 parts by weight with respect to 100 parts by weight of metal phosphate.

Micro silica may include basic and acidic types, and more specifically, may include a basic type. When basic micro silica is included, it may be advantageous in terms of the stability of the insulation coating composition, and the storage stability of the solution may be improved. The basic micro silica may have a pH of 8 to 12. The pH of micro silica may be measured in a sol form by grinding silica to manufacture nano sized silica.

In an embodiment of the present invention, micro silica refers to silica having a particle diameter in the range of 0.5 to 50 µm. More specifically, micro silica refers to silica having a particle diameter in the range of 1 to 10 µm.

The micro silica may have an average particle diameter in the range of 1 to 20 µm. If the average particle diameter is too large, the condensation reaction rate may be slow. More specifically, the micro silica may have an average particle diameter in the range of 5 to 10 µm.

An insulation coating composition for an electrical steel sheet according to an embodiment of the present invention comprises 28 to 215 parts by weight of a nitrate based on 100 parts by weight of a metal phosphate. The nitrate contributes to improving corrosion resistance and weather resistance. In addition, the nitrate serves as a dispersant for stably dispersing a boron compound and a chromium compound, which will be described later, in the insulation coating composition. In particular, when the composition is used as an insulation coating for a grain-oriented electrical steel sheet, in which it is difficult to use an organic dispersant, the nitrate serves as a dispersant. If the nitrate is included in too small an amount, it is difficult to sufficiently achieve the above-described roles. If the nitrate is included in too large an amount, there may be a risk of fire. More specifically, the composition comprises 30 to 200 parts by weight of the nitrate based on 100 parts by weight of the metal phosphate.

The nitrate may include at least one of aluminum nitrate (Al(NO₃)₃), cobalt nitrate (Co(NO₃)₂), calcium nitrate (Ca(NO₃)₂), strontium nitrate (Sr(NO₃)₂), zinc nitrate (Zn(NO₃)₂), manganese nitrate (Mn(NO₃)₂), magnesium nitrate (Mg(NO₃)₂), and silver nitrate (AgNO₃).

The nitrate may include two or more of aluminum nitrate (Al(NO₃)₃), cobalt nitrate (Co(NO₃)₂), calcium nitrate (Ca(NO₃)₂), strontium nitrate (Sr(NO₃)₂), zinc nitrate (Zn(NO₃)₂), manganese nitrate (Mn(NO₃)₂), magnesium nitrate (Mg(NO₃)₂), and silver nitrate (AgNO₃). When two or more types of nitrates are included, it is advantageous in terms of improving corrosion resistance and weather resistance. More specifically, the nitrate may include aluminum nitrate (Al(NO₃)₃) and magnesium nitrate (Mg(NO₃)₂). In this case, each may be included in an amount of 10 to 150 parts by weight. More specifically, each may be included in an amount of 15 to 100 parts by weight.

An insulation coating composition for an electrical steel sheet according to an embodiment of the present invention comprises 10 to 100 parts by weight of a boron compound with respect to 100 parts by weight of a metal phosphate. The boron compound may further improve the tension of the insulation coating by providing porosity to the insulation coating. If the boron compound is included in too small an amount, it is difficult to sufficiently achieve the above-described role. If the boron compound is included in too large an amount, gelation occurs, which may cause a problem in terms of solution stability. More specifically, 20 to 70 parts by weight of the boron compound may be included with respect to 100 parts by weight of the metal phosphate. More specifically, 25 to 50 parts by weight of the boron compound may be included with respect to 100 parts by weight of the metal phosphate.

The boron compound may include at least one of borax and boronic acid. The boronic acid may include at least one of methylboronic acid and propenylboronic acid.

Borax is represented by Na₂B₄O₇ and may include borax decahydrate, borax pentahydrate, or anhydrous borax.

Boric acid is represented by H₃BO₃ and may include at least one of methylboronic acid and propenylboronic acid.

An insulation coating composition for an electrical steel sheet according to an embodiment of the present invention comprises 8 to 110 parts by weight of a chromium compound with respect to 100 parts by weight of a metal phosphate. The chromium compound includes chromium (Cr) in the compound and serves to form a uniform coating by improving dispersion stability. In addition, the chromium compound has an advantage in that stable operation may be performed in an insulation coating process. If the content of the chromium compound is too low, weather resistance and corrosion resistance may not be sufficiently obtained. If the content of the chromium compound is too high, gelation may occur and the corrosion resistance may rather be deteriorated. More specifically, the chromium compound is included in an amount of 10 to 100 parts by weight with respect to 100 parts by weight of the metal phosphate.

The chromium compound may comprise at least one of chromic acid, chromate, and dichromate.

Chromic acid may be represented by CrO₃, H₂CrO₄, H₂Cr₂O₇, H₂Cr₃O₁₀, H₂Cr₄O₁₃, and the like.

As for the chromate and the dichromate, for example, a chromate or a dichromate containing Na, K, Mg, Ca, Mn, Mo, Zn, or Al may be included. When two or more types of chromium compounds are included, the total amount thereof may be within the range described above.

In addition to the aforementioned components, the composition for forming an insulating coating may further include a solvent. The solvent serves to facilitate the application of the composition and to uniformly disperse the components. The amount of the solvent is not particularly limited, but the solvent may be included in an amount of 100 parts by weight to 1000 parts by weight with respect to 100 parts by weight of the metal phosphate.

Fig. 1 shows a schematic view of a cross section of an electrical steel sheet 100 according to an embodiment of the present invention. As shown in Fig. 1, the electrical steel sheet 100 according to an embodiment of the present invention comprises an electrical steel sheet substrate 10 and an insulation coating 20 disposed on the electrical steel sheet substrate 10.

As the electrical steel sheet substrate 10, a general non-oriented or grain-oriented electrical steel sheet may be used without limitation. In an embodiment of the present invention, since a main feature is the formation of an insulation coating 20 of specific components on the electrical steel sheet substrate 10, a detailed description of the electrical steel sheet substrate 10 will be omitted.

Additionally, the components of the grain-oriented electrical steel sheet substrate will be described below.

The grain-oriented electrical steel sheet substrate comprises 2.0 to 7.0 wt% of silicon (Si), 0.020 to 0.040 wt% of aluminum (Al), 0.01 to 0.20 wt% of manganese (Mn), 0.01 to 0.15 wt% of phosphorus (P), 0.01 wt% or less of carbon (C) (excluding 0%), 0.005 to 0.05 wt% of nitrogen (N), and 0.01 to 0.15 wt% of at least one of antimony (Sb), tin (Sn), and a combination thereof, and the balance may comprise Fe and other inevitable impurities. Since the description of each component of the grain-oriented electrical steel sheet substrate 10 is the same as commonly known content, a detailed description thereof will be omitted.

Between a grain-oriented electrical steel sheet substrate and an insulation coating, a metal oxide layer (base coating layer, primary coating) formed by reacting with an annealing separator and an oxide layer of the steel sheet during a secondary recrystallization process may be present. The metal oxide layer may be, for example, a forsterite layer. In the manufacturing process of the grain-oriented electrical steel sheet, the grain-oriented electrical steel sheet substrate and the insulation coating may also contact each other by suppressing the formation of the metal oxide layer or removing the metal oxide layer.

The thickness of the insulation coating 20 may be 0.5 to 10 µm. If the thickness of the insulation coating 20 is too thin, it may be difficult to secure appropriate insulation. If the thickness of the insulation coating 20 is too thick, the space factor may decrease. In an embodiment of the present invention, even if a thin insulation coating 20 is formed, appropriate insulation may be secured. More specifically, the thickness of the insulation coating 20 may be 1 to 5 µm.

The insulation coating 20 comprises 100 parts by weight of metal phosphate, 33 to 110 parts by weight of nano silica having a particle diameter of 1 to 50 nm, 45 to 325 parts by weight of micro silica having a particle diameter of 0.5 to 50 µm, 28 to 215 parts by weight of nitrate, 10 to 100 parts by weight of a boron compound, and 8 to 110 parts by weight of a chromium compound. The insulation coating may be substantially the same as the solid content components in the above-described insulation coating composition. In particular, the nano silica and the micro silica maintain their particle diameters even in the insulation coating 20, and the contents of the nano silica and the micro silica may be measured when an area sufficient for analysis with an electron microscope is analyzed.

A method for manufacturing an electrical steel sheet according to an embodiment of the present invention comprises the steps of: preparing an electrical steel sheet substrate; applying an insulation coating composition to a surface of the electrical steel sheet substrate; and heat treating.

Since details about the electrical steel sheet substrate and the insulation coating composition have been described above, redundant descriptions will be omitted.

As an example, the substrate of the electrical steel sheet may be manufactured as follows.

Prepare a steel slab. In the next step, the steel slab is heated. At this time, slab heating may be performed by a low temperature slab method at 1,200°C or less. Next, the heated steel slab is hot rolled to manufacture a hot-rolled steel sheet. Thereafter, the manufactured hot-rolled steel sheet may be subjected to hot-rolled steel sheet annealing. Next, the hot-rolled steel sheet is subjected to cold rolling to manufacture a cold-rolled steel sheet. Cold rolling may be performed once, or cold rolling may be performed twice or more including intermediate annealing. Next, the cold-rolled steel sheet is subjected to primary recrystallization annealing. At this time, the step of performing primary recrystallization annealing on the cold-rolled steel sheet may include the step of performing decarburization annealing and nitriding annealing on the cold-rolled steel sheet simultaneously, or may include the step of performing nitriding annealing after decarburization annealing. Next, an annealing separator is applied on the surface of the recrystallized annealed steel sheet. The coating amount of the annealing separator may be 1 to 5 g/m². If the coating amount of the annealing separator is too small, coating formation may not be smoothly achieved. If the coating amount of the annealing separator is too large, secondary recrystallization may be affected. Therefore, the coating amount of the annealing separator may be adjusted to the above described range. Next, the steel sheet on which the annealing separator is applied is subjected to secondary recrystallization annealing. During secondary recrystallization annealing, the primary soaking temperature may be 650 to 750°C, and the secondary soaking temperature may be 1100 to 1250°C. In the temperature range of the heating period, the heating rate may be controlled at a condition of 15°C/hr. In addition, the gas atmosphere may be performed in an atmosphere containing 20 to 30 vol% of nitrogen and 70 to 80 vol% of hydrogen until the primary soaking step, and in the secondary soaking step, after being maintained in a 100% hydrogen atmosphere for 15 hours, it may be furnace cooled.

In the heat treating step, the heat treatment temperature may be 700 to 1000°C. If the temperature is too low, the time taken to form the insulation coating may become excessively long, and the continuous processing workability may deteriorate. If the temperature is too high, heat resistance and blueing resistance may decrease due to cracking. More specifically, the heat treatment temperature may be 750 to 950°C. The heat treatment time may be 10 to 300 seconds. More specifically, it may be 30 seconds to 180 seconds.

The atmosphere during heat treatment may be a nitrogen atmosphere.

Preferred examples of the present invention, comparative examples compared thereto, and evaluation examples thereof are described below. However, the following examples are only preferred examples of the present invention, and the present invention is not limited to the following examples.

### Example

A final annealed grain-oriented electrical steel sheet (300*60 mm) having a primary coating, containing 3.1% by weight of Si, and having a sheet thickness of 0.23 mm was prepared as a specimen.

An insulation coating composition was prepared by mixing components in the ratios summarized in Table 1 below. First, alkaline colloidal nano silica (particle diameter in the range of 5 nm to 20 nm, average particle diameter of 15 nm) and alkaline micro silica (particle diameter in the range of 1 µm to 2 µm, average particle diameter of 1.5 µm) were added to and mixed with a phosphate solution comprising 50 parts by weight of aluminum phosphate and 50 parts by weight of magnesium phosphate. Thereafter, a nitrate solution comprising aluminum nitrate and magnesium nitrate in equal amounts was added, and then anhydrous borax and chromic acid (CrO₃) were added to finally prepare the insulation coating composition.

The prepared solution was applied to both sides of an electrical steel sheet in an amount of 3.1 g/mm² and heat-treated at 850°C for 45 seconds to form an insulation coating having a thickness of 1 µm.

Weather resistance, corrosion resistance, solution stability, and tension were evaluated by the following methods and summarized in Table 2.

### Weather resistance evaluation

Weather resistance was evaluated under conditions of 98% relative humidity, 60°C, and 72 hours, and was indicated as "OK" for a good result and "NG" for a poor result.

### Corrosion resistance evaluation

A salt spray test was performed under conditions of 5% NaCl, 100% RH, and 65°C for 8 hours. The results were indicated as "OK" for a good condition and "NG" for a poor condition.

### Solution stability evaluation

A 2x2 cm size coating plate is dissolved in 100 ml of 10% NaOH and then filtered. The material that exists as a powder without being dissolved is PO₄. After the weight of the powder remaining on the filter is measured, if powder is present, it may be determined that HPO₄ was removed by an oxidizing agent.

Cl tracking method: After dissolving a coating having a size of 2 cm x 2 cm in 100 mL of 10% NaOH, if a Cl component is present in the solution, it may be considered that Cl was added.

### Tension evaluation

A specimen is placed on a floor, and a top point where the specimen is bent from the floor is marked. A distance between the top point and a position of the specimen before bending is measured and is inputted as a length of the maximum bending portion (H). Then, measurement is performed as follows. $σ = E / \left(1-v\right) \times {T}^{2} / 3 t \times 2 H / {l}^{2}$
σ = coating tension (Kg/mm)
ν = Poisson's ratio (0.3)
t = thickness after coating removal (mm)
T = thickness before coating removal (mm)
H = length of the maximum curved portion (mm)
I = specimen length (mm)

**[Table 1]**

| (parts by weight) | Phosphate | Nano silica | Micro silica | Nitrate | Boron compound | Chromium compound |
|---|---|---|---|---|---|---|
| 1 | 100 | 58 | 100 | 53 | 26 | 12 |
| 2 | 100 | 35 | 100 | 53 | 26 | 12 |
| 3 | 100 | 100 | 100 | 53 | 26 | 12 |
| 4 | 100 | 30 | 100 | 53 | 26 | 12 |
| 5 | 100 | 120 | 100 | 53 | 26 | 12 |
| 6 | 100 | 58 | 100 | 30 | 26 | 12 |
| 7 | 100 | 58 | 100 | 200 | 26 | 12 |
| 8 | 100 | 58 | 100 | 25 | 26 | 12 |
| 9 | 100 | 58 | 100 | 230 | 26 | 12 |
| 10 | 100 | 58 | 50 | 53 | 26 | 12 |
| 11 | 100 | 58 | 300 | 53 | 26 | 12 |
| 12 | 100 | 58 | 40 | 53 | 26 | 12 |
| 13 | 100 | 58 | 350 | 53 | 26 | 12 |
| 14 | 100 | 58 | 100 | 53 | 26 | 10 |
| 15 | 100 | 58 | 100 | 53 | 26 | 100 |
| 16 | 100 | 58 | 100 | 53 | 26 | 5 |
| 17 | 100 | 58 | 100 | 53 | 26 | 120 |
| 19 | 100 | 58 | 100 | 53 | 5 | 12 |
| 20 | 100 | 58 | 100 | 53 | 120 | 12 |

**[Table 2]**

| | Corrosion resistance | Tension (Mpa) | Weather resistance | Solution stability | Classification |
|---|---|---|---|---|---|
| 1 | OK | 5 | OK | 8 | Example |
| 2 | OK | 5 | OK | 8 | Example |
| 3 | OK | 5 | OK | 8 | Example |
| 4 | OK | 3 | OK | 8 | Comparative Example |
| 5 | OK | 5 | OK | 30 | Comparative Example |
| 6 | OK | 5 | OK | 8 | Example |
| 7 | OK | 5 | OK | 8 | Example |
| 8 | OK | 4 | OK | 8 | Comparative Example |
| 9 | OK | 5 | OK | 10 | Comparative Example |
| 10 | OK | 5 | OK | 8 | Example |
| 11 | OK | 5 | OK | 8 | Example |
| 12 | OK | 3 | OK | 8 | Comparative Example |
| 13 | OK | 5 | OK | 20 | Comparative Example |
| 14 | OK | 5 | OK | 8 | Example |
| 15 | OK | 5 | OK | 8 | Example |
| 16 | NG | 5 | NG | 8 | Comparative Example |
| 17 | NG | 5 | OK | 8 | Comparative Example |
| 19 | NG | 5 | NG | 8 | Comparative Example |
| 19 | OK | 5 | OK | 30 | Comparative Example |

As shown in Tables 1 and 2, when the components of the insulation coating composition are included in appropriate amounts, it may be confirmed that weather resistance, corrosion resistance, solution stability, and tension are simultaneously excellent. On the other hand, when the components of the insulation coating composition are not appropriately included, it may be confirmed that some characteristics are inferior.

The present invention is not limited to the above embodiments, but may be manufactured in various different forms, and a person skilled in the art to which the present invention pertains will understand that it may be implemented in other specific forms without changing the technical spirit or essential features of the present invention. Therefore, it should be understood that the embodiments described above are illustrative in all respects and not restrictive.

### [Description of symbols]

| | | | |
|---|---|---|---|
| 100: | electrical steel sheet | 10: | electrical steel sheet substrate |
| 20: | insulation coating | | |

## Claims

1. An insulation coating composition for an electrical steel sheet comprising:
100 parts by weight of a metal phosphate,
33 to 110 parts by weight of nano silica having a particle diameter of 1 to 50 nm,
45 to 325 parts by weight of micro silica having a particle diameter of 0.5 to 50 µm,
28 to 215 parts by weight of a nitrate,
10 to 100 parts by weight of a boron compound, and
8 to 110 parts by weight of a chromium compound.

2. The insulation coating composition of claim 1,
wherein the metal phosphate comprises at least one of Mg, Ca, Ba, Sr, Zn, and Al.

3. The insulation coating composition of claim 1,
wherein the nitrate includes at least one of aluminum nitrate, cobalt nitrate, calcium nitrate, strontium nitrate, zinc nitrate, manganese nitrate, magnesium nitrate, and silver nitrate.

4. The insulation coating composition of claim 1,
wherein the nitrate includes at least two of aluminum nitrate, cobalt nitrate, calcium nitrate, strontium nitrate, zinc nitrate, manganese nitrate, magnesium nitrate, and silver nitrate.

5. The insulation coating composition of claim 1,
wherein the boron compound comprises at least one of borax and boronic acid.

6. The insulation coating composition of claim 1,
wherein the chromium compound includes at least one of chromic acid, chromate, and dichromate.

7. The insulation coating composition of claim 1,
wherein the nano silica and the micro silica each has a pH of 8 to 12.

8. An electrical steel sheet comprising an electrical steel sheet substrate and an insulation coating located on a surface of the electrical steel sheet substrate,
wherein the insulation coating comprises 100 parts by weight of a metal phosphate, 33 to 110 parts by weight of a nano silica having a particle diameter of 1 to 50 nm, 45 to 325 parts by weight of a micro silica having a particle diameter of 0.5 to 50 µm, 28 to 215 parts by weight of a nitrate, 10 to 100 parts by weight of a boron compound, and 8 to 110 parts by weight of a chromium compound.

9. A method for manufacturing an electrical steel sheet comprising the steps of:
preparing an electrical steel sheet substrate;
applying an insulation coating composition to a surface of the electrical steel sheet substrate; and
heat treating the electrical steel sheet substrate,
wherein the insulation coating composition comprises 100 parts by weight of a metal phosphate, 33 to 110 parts by weight of a nano silica having a particle diameter of 1 to 50 nm, 45 to 325 parts by weight of a micro silica having a particle diameter of 0.5 to 50 µm, 28 to 215 parts by weight of a nitrate, 10 to 100 parts by weight of a boron compound, and 8 to 110 parts by weight of a chromium compound.

10. The method for manufacturing an electrical steel sheet of claim 9,
wherein the heat treating step is performed at a temperature of 700 to 1000°C for 10 seconds to 300 seconds.
